Europäisches Patentamt

European Patent Office

Office européen des brevets

(19)

(11) Veröffentlichungsnummer: **0 289 907 B1**

## (12) EUROPÄISCHE PATENTSCHRIFT

(45) Veröffentlichungstag der Patentschrift: **08.07.92**

(51) Int. Cl.⁵: **G21C** **19/30**, F23Q 3/00

(21) Anmeldenummer: **88106613.8**

(22) Anmeldetag: **25.04.88**

(54) **Einrichtung zur kontrollierten Verbrennung von zündfähigen Wasserstoff-Luft-Gemischen im Containment von wassergekühlten Kernreaktoranlagen.**

(30) Priorität: **08.05.87 DE 3715469**

(43) Veröffentlichungstag der Anmeldung:
**09.11.88 Patentblatt 88/45**

(45) Bekanntmachung des Hinweises auf die Patenterteilung:
**08.07.92 Patentblatt 92/28**

(84) Benannte Vertragsstaaten:
**BE CH DE ES FR IT LI SE**

(56) Entgegenhaltungen:
**DE-A- 3 004 677
FR-A- 2 198 095
US-A- 2 856 564
US-A- 4 425 495**

(73) Patentinhaber: **SIEMENS AKTIENGESELL-SCHAFT
Wittelsbacherplatz 2
W-8000 München 2(DE)**

(72) Erfinder: **Heck, Reinhard
Kurfürstenstrasse 43
W-6450 Hanau 1(DE)**

**Beschreibung**

Die Erfindung bezieht sich auf eine Einrichtung zur kontrollierten Verbrennung von zündfähigen Wasserstoff-Luft-Gemischen im Containment von wassergekühlten Kernreaktoranlagen, mit wenigstens einer Zündquelle. Nach einem schweren Störfall können im Sicherheitsbehälter von Leichtwasserreaktoren zündfähige Wasserstoff-Luft-Gemische vorkommen. Dabei wird unter schwerer Störfall der bei modernen Leichtwasserreaktoren sehr unwahrscheinliche Fall des Kernschmelzens verstanden. Eine Vorstufe davon trat bei dem TMI-Störfall 1979 in den USA auf. Die im oberen Bereich des Kerns aufgetretene Überhitzung der Brennelemente kam dabei zum Stillstand, und eine große Menge von Wasserstoffgas, die im Containment eingeschlossen war, konnte ohne Gefährdung der anliegenden Gebiete beseitigt werden. Wenn solche Gasgemische bei hohen $H_2$-Konzentrationen unkontrolliert gezündet werden, wird der Reaktorsicherheits-Behälter durch Explosions-Druck und -Temperatur zusätzlich belastet. Die gezielte, frühzeitige Zündung der $H_2$-Luft-Gemische bei niedriger $H_2$-Konzentration minimiert diese Belastungen und verhindert ein Undichtwerden des Sicherheitsbehälters.

Vorschläge, wie unerwünschte $H_2$-Mengen im Containment beseitigt werden können, gibt es schon seit langem. Durch die DE-0S 22 39 952 ist eine nicht gattungsgemäße Einrichtung bekannt, bei der eine Rekombinationseinrichtung zum Verbinden von Wasserstoff und Sauerstoff zu Wasser im Containment angeordnet ist. Die dabei miteinander reagierenden beiden Gase werden dabei auf die geeignete Reaktionstemperatur von mindenstens 620° C, vorzugsweise auf 760° C, aufgeheizt. Solche Rekombinatoren beanspruchen verhältnismäßig viel Raum.

Es sind deshalb auch schon kompaktere Abgasverbrennungs-Systeme für Kernreaktoren entwickelt worden, siehe z.B DE-0S 20 16 800, die als sogenannter Stöpselbrenner bezeichnet werden. Dabei werden $H_2$ und $O_2$ durch gesinterte, poröse Kupferplatten geleitet, die von Kühlröhrchen durchzogen sind, und verbrennen an und in diesen porösen Kupferplatten, wobei eine Einströmkammer und eine Ausströmkammer (wo der Wasserdampf anfällt) durch solche gesinterte poröse, gekühlte Kupferplatten nach außen bzw. gegeneinander abgeschottet sind. Dieser wassergekühlte Brenner benötigt mindestens eine Zündquelle, er ist insbesondere für Siedewasser-Kernreaktoranlagen geeignet, wo nicht nur im Störfall, sondern durch Radiolyse bedingt schon während des Normalbetriebes zu beseitigende Wasserstoffmengen anfallen.

Durch die DE-PS 30 04 677 ist es bekannt, in allen Bereichen des Sicherheitsbehälters, in denen Wasserstoff auftreten kann, Zündquellen anzuordnen, die in einem Raster angeordnet sind, dessen Abstand von dem Gefährungspotential des jeweiligen Bereiches abhängig ist. Bei dieser an sich selbstverständlichen Maßnahme (auch beim Gegenstand der DE-OS 20 16 800 sind mehrere Zündquellen mit mehreren Brennern vorgesehen, die natürlich auch bei einem schweren Störfall arbeiten müssen) werden als Zündquellen Glühkerzen, Zündkerzen oder katalytische Zündquellen verwendet. Katalytische Zündqellen unterliegen einer Verschmutzung und deshalb der besonderen Problematik, ob sie im Notfall wirklich funktionieren. Glühkerzen und Zündkerzen bedürfen einer Energieversorgung über Kabel, in aller Regel von der Notstromversorgung, jedoch kann auch diese im vorerwähnten Störfall ausfallen.

Der Erfindung liegt die Aufgabe zugrunde, die gattungsgemäße Einrichtung so auszubilden, daß sie mit einer kabellosen Energieversorgung auskommt und in jedem Falle ihre Funktiontüchtigkeit im Störfall gewährleistet ist, d.h. eine gezielte, frühzeitige Zündung der $H_2$-Luft-Gemische bei niedriger $H_2$-Koncentration erreicht werden kann. Erfindungsgemäß wird die gestellte Aufgabe bei einer Einrichtung gemäß Oberbegriff des Patentanspruchs 1 durch die im Kennzeichen des Anspruchs 1 angegebenen Merkmale gelöst. Vorteilhafte Weiterbildungen sind in den Patentansprüchen 2 bis 5 angegeben.

Unter autark wird verstanden, daß der Energiespeicher keiner Zuleitungen bedarf, seien es Kabel oder andere Energietransportleitungen, so daß eine Abhängigkeit von einem entfernt angeordneten Energiespeicher entfällt. Dieser ist vielmehr unmittelbar der Zündquelle zugeordnet. Ist der Energiespeicher eine Trockenbatterie, so ist eine elektrische Fernüberwachung seines Ladezustandes auf einfache Weise möglich. Es ist aber auch möglich, durch eine kleine Glimmlampe am Ort der Zündquelle leicht überschaubar den Ladezustand darzustellen.

Eine bevorzugte Ausführungsform besteht darin, daß der Energiespeicher die Trockenbatterie einer Hochspannungs-Zündeinheit mit einem federbelasteten Schalter im Stromkreis der Trockenbatterie sowie mit Hochspannungsmodul, Ladekondensator und Funkenzünder ist und daß das temperaturabhängig ansprechende Auslöseelement zur Schließung des federbelasteten Schalters im Ansprechfalle eingerichtet ist. Solche Hochspannungszündeinheiten sind in vielfältigen Ausführungsformen bereits im Handel, z.B. für Elektronen-Blitzgeräte. Es ist dabei erforderlich, daß die vorgenannten Elemente mit Ausnahme des temperaturabhängig ansprechenden Auslöseelements feuchtigkeits-, druck- und temperaturgeschützt innerhalb eines Gehäuses, insbesondere Metallgehäuses, untergebracht und verdrahtet sind. Die Wandung des Gehäuses wird lediglich vom Funkenzünder, einem Schaltstift und eventuell von Prüfbuchsen (zur Ladekontrolle der Trockebatterie) durchdrungen. Besonders günstig ist es, wenn ein schnell ansprechendes Sprinkler-Element (Fast-Response-Sprinkler) als Auslöseelement dient, welches eine bei Erreichen eines Temperatur-Grenzwertes platzende Wand, Haut oder Membrane aufweist, die dann im Ansprechfalle den Energiespeicher zur Entladung bzw. den federbelasteten Schalter zur Schließung freigibt. Alternativ oder redundant (zusätzlich) zur Sprinkler-Auslösung kann auch eine Bimetall-Anordnung als temperaturabhängiges Auslöseelement vorgesehen sein, welches bei Erreichen eines Temperatur-Grenzwertes den federbelasteten Schalter zur Schließung freigibt oder betätigt.

Besonderes Augenmerk muß darauf gerichtet werden, daß der Energiespeicher im allgemeinen und die Trockenbatterie im besondern auch bei höheren Temperaturen in der Größenordnung von 200° C zufriedenstellend, d.h. über einen Zeitraum von etwa vier bis fünf Tagen, arbeitet. Besonders günstig sind in diesem Zusammenhang Lithium-Sammler als Energiespeicher, die solchen Temperaturbelastungen gewachsen sind. Zum Beispiel ist eine Lithiumchlorid-Zelle ein elektrochemisches Sekundärelement von beträchtlich höherer spezifischer Energie- und Ladungsdichte als konventionelle Akkumulatoren. Die Lithiumchlorid-Zelle enthält z.B. eine ringförmige, poröse Edelstahlanode, in deren Poren sich geschmolzenes Lithium befindet, und eine in den Anodenring ragende zylindrische, ebenfalls poröse Graphitkathode, durch die beim Entladevorgang Chlor diffundiert, zwischen beiden befindet sich eine Lithiumchloridschmelze als Elektrolyt.

Im folgenden werden mehrere Ausführungsbeispiele der Erfindung anhand der Zeichnung beschrieben und weitere Einzelheiten und Vorteile sowie die Wirkungsweise des Erfindungsgegenstandes näher erläutert. In der Zeichnung zeigen in vereinfachter Darstellung:

FIG 1 die prinzipielle Ausführung einer einfachen Zündquelle mit Trockenbatterie, Hochspannungsmodul und Funkenstrecke, wobei die Auslösung eines federbelasteten Schalters durch ein Sprinkler-Element erfolgt.

FIG 2 eine Variante der Zündquellen nach FIG 1 mit Taktgenerator, Schutzdiode und Hochspannungs-Zündtransformator.

FIG 3 schematisch der Sprühkopf eines Fast-Response-Sprinklers mit einem Glasfäßchen, welches bei Erreichen der Grenztemperatur zerbirst, und einem federbelasteten Schalter, dessen Kontaktbrücke mit einem Auslösestößel des Sprinkler-Elementes gekoppelt ist.

FIG 4 eine Bimetall-Anordnung, ebenfalls schematisch, die auch als temperaturabhängiges Auslöseelement zur Einleitung des Zündvorganges der Zündquelle dienen kann.

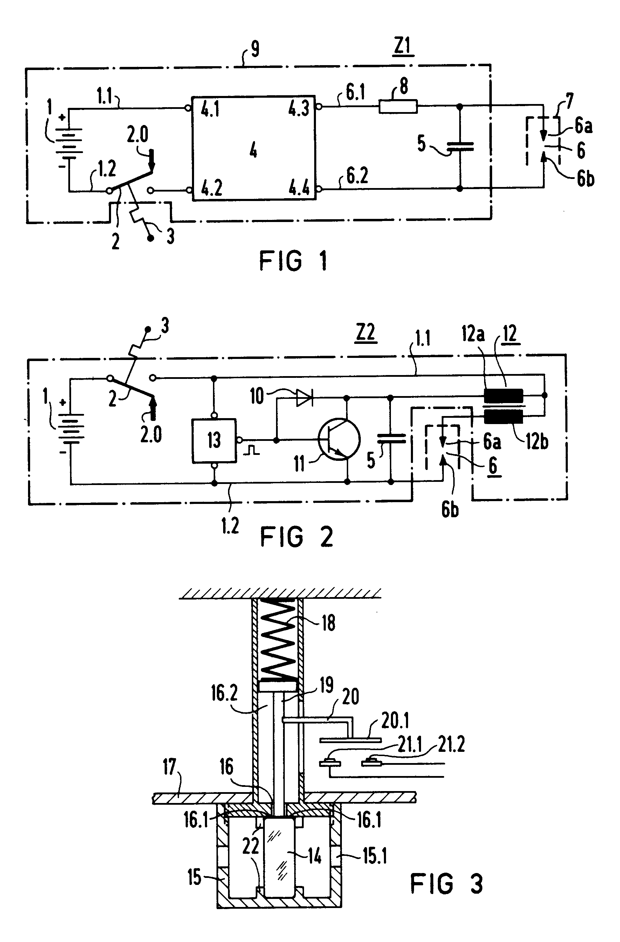

Gemäß FIG 1 sind die Plusleitung 1.1 und die Minusleitung 1.2 einer Trockenbatterie 1 an die Eingangsklemmen 4.1, 4.2 eines Hochspannungsmoduls 4 angeschlossen, wobei in der Minusleitung 1.2 noch ein federbelasteter Schalter 2 eingeschaltet ist, welcher in Wirkverbindung mit dem Auslöseelement 3 eines (nicht näher dargestellten) Fast-Response-Sprinklers gebracht ist. An die Plus- bzw. Minus-Ausgangsklemmen 4.3 bzw. 4.4 des Hochspannungsmoduls 4 ist die Funkenstrecke 6a-6b eines elektrischen Funkenzünders 6 über die elektrischen Hochspannungsleitungen 6.1 bzw. 6.2 angeschlossen, wobei im Leitungsteil 6.1 noch ein Ladewiderstand 8 angeordnet ist und zwischen Ladewiderstand und Funkenstrecke 6 die beiden Leitungen 6.1, 6.2 durch einen Ladekondensator 5 miteinander verbunden sind. Der Funkenzünder 6 ist mit einem Spritzschutz 7 versehen. Wie erkennbar, sind alle Bauteile dieser als Ganzes mit Z1 bezeichneten Zündquelle, mit Ausnahme des Sprinkler-Elementes 3, einem dazugehörenden Schaltstift sowie des Funkenzünders 6 feuchtigkeits-, druck- und temperaturgeschützt innerhalb eines Metallgehäuses 9 untergebracht und darin verkabelt. Die Wand des Metallgehäuses wird lediglich von den elektrischen Zuleitungen des Funkenzünders 6, dem erwähnten Schaltstift des Sprinkler-Elementes und eventuell von Prüfbuchsen (zur Ladekontrolle der Trockenbatterie) druck- und feuchtigkeitsdicht durchdrungen. Eine praktische Ausführung der Zündquelle Z1 nimmt z.B. ein Volumen von ca. 2 dm ein. Im Auslösefalle, d.h. wenn das Sprinkler-Element 3 anspricht, wird der federbelastete Schalter 2 durch die mit einem schwarzen Pfeil 2.0 angedeutete Feder in seine Schließstellung verlagert, und der Hochspannungsmodul 4 wird von der Trockenbatterie 1 mit Gleichstrom versorgt. Die in diesem Hochspannungsmodul 4 erzeugte Hochspannung wird an den Klemmen 4.3, 4.4 von dem äußeren Zündkreis abgenommen und erzeugt über die RC-Kombination 8,5 eine sägezahnförmig verlaufende Zündhochspannung an den beiden Zündelektroden 6a, 6b. Die Taktzeit kann mehrere Minuten betragen, weil nach Abfackeln eines Wasserstoffvolumens eine bestimmte Zeit vergeht, bis wieder ein zündfähiges Gemisch vorliegt. Die Batterie 1 hat eine solche Kapazität, daß die taktenden Zündvorgänge sich über mehrere Tage erstrecken können. Das Hochspannungsmodul 4 ist eine elektronische Baueinheit, welche die Spannung von der Niedervolt-Trockenbatterie 1 auf die erforderliche Funkenspannung transformiert. Es formt den Gleichstrom in einen transformierbaren Impulsstrom um. Grundsätzlich könnte bei der Zündquelle Z1 nach FIG 1 anstelle eines elektronischen Unterbrechers auch ein mechanischer Unterbrecher vorgesehen sein.

Bei der Zündquelle Z2 nach FIG 2 sind einige Schaltelemente des Hochspannungsmoduls detaillierter dargestellt und nur ein Taktgenerator 13 in Form eines Blocks symbolisiert. Dieser Taktgenerator 13 gibt im Falle des Schließens des Schalters 2, wenn das Sprinkler-Element 3 angesprochen hat, eine Impulsfolge an den nachgeschalteten Hochspannungs-Transistor 11 ab, zu dessen Basis-Emitter-Strecke noch eine Schutzdiode 10 parallel geschaltet ist. In den Schaltweg zwischen Plusleitung 1.1 und Minusleitung 1.2 der Trockenbatterie 1 ist die Primärwicklung 12a eines Zündtransformators 12 eingeschaltet, welche bei leitendem Transistor 11 über die Emitter-Kollektor-Strecke vom Batterie-Gleichstrom durchflossen wird und dabei induktive Energie speichert. Wird der Transistor 11 durch eine entsprechende Basisvorspannungen gesperrt, so wird in der sekundären Hochspannungswicklung 12b eine hohe Zündspannung induziert, welche sich als Zündfunken an der Funkenstrecke 6 entlädt. Der Transistor 11 arbeitet ähnlich wie derjenige einer Transistorzündung in einem Kraftfahrzeug.

Die Mitbenutzung des Auslöseelementes einer automatischen Sprinkler-Anlage ist, wie bereits angedeutet, besonders vorteilhaft. Sprinkler-Anlagen sind bekanntlich selbsttätige Feuerlöschanlagen mit über die zu schützenden Räume verteilten Sprühdüsen für das Löschmittel Wasser und dienen zur Bekämpfung von Entstehungsbränden. Sie werden durch die Brandwärme am Ort ausgelöst, indem diese den Verschluß einer Sprühdüse - des Sprinklerkopfes - zerstört. Als auslösende Wärme kommen nach der Erfindung auch heiße Gas-Dampf-Gemische in Betracht, die im Störfall im Containment vorhanden sind. Die Verschlüsse der Sprinkler-Sprühdüse bestehen entweder aus Schmelzloten oder Glasfäßchen und können für verschiedene Auslösetemperaturen hergestellt werden. Normalerweise wird die Auslösetemperatur so gewählt, daß sie 50 K über der normalen Raumtemperatur liegt. FIG 3 zeigt schematisch ein Sprinkler-Element 3 mit einem zylindrischen Glasfäßchen 14, welches von einer korb-oder käfigartig offenen oder mit z.B. seitlichen Konvektionsöffnungen 15.1 versehenen Schraubkappe 15 gegen die Sitzflächen 16.1 einer Öffnung 16 in der Wand 17 eines Sprinkler-Behälters gedrückt wird. Durch die Öffnung 16 und den Kanal 16.2 ragt ein mittels der Schraubendruckfeder 18 federbelasteter Stößel 19, an dem ein Kontaktbrückenträger 20 mit Kontaktbrücke 20.1 befestigt ist. Den beweglichen Kontakten 20.1 stehen Festkontakte 21.1 und 21.2 gegenüber, wobei die öffen- oder schließbare Kontaktstrecke 21.1-21.2 im Zusammenwirken mit der Kontaktbrücke 20.1 den federbelasteten Schalter 2 nach FIG 1 bzw. FIG 2 bilden kann. Das in Ringkörpern 22 an seinen beiden Enden geführt gehalterte Glasfäßchen 14 zerspringt, wenn die Ansprechtemperatur erreicht ist, und der Stößel 19 wird durch die Feder 18 in Richtung auf den Innenraum der Schraubkappe 15 verlagert, wodurch sich die Kontaktbrücke 20.1 auf die beiden Festkontakte 21.1, 21.2 legt. Der Kanal 16.1 und die freigegebene Öffnung 16 dienen sonst zum Einleiten von Löschwasser unter Druck von einem nicht näher dargestellten Sprinkler-Reservoir, wobei das Wasser in Form eines breit aufgefächerten Löschkegels durch Düsenöffnungen in der Schraubkappe nach außen tritt; hier jedoch ist das dargestellte Sprinklerelement zu einem temperaturabhängig schnell schließenden Schalter für die Zündquelle Z1 bzw. Z2 umgebaut. Die Löschfunktion von weiteren (nicht dargestellten ) Fast-Response-Sprinklern der üblichen Bauart, bei den die Kappe 15 als Sprühkopf dient, bleibt natürlich erhalten.

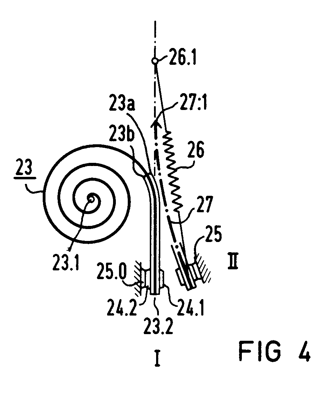

Als temperaturabhängig ansprechendes Auslöseelement für den federbelasteten Schalter 2 kann auch eine Bimetall-Anordnung 3' nach FIG 4 dienen. Das innere Ende 23.1 der Bimetall-Spirale 23 dient zugleich als Einspannpunkt und als der eine Schalterkontakt. Das freie Ende 23.2 der Bimetall-Spirale 23 trägt einen Doppelkontakt 24.1, 24.2 der in der einen dargestellten Lage I an einem Leerkontakt 25.0 anliegt. In der anderen dargestellten Lage II hat sich die Bimetall-Spirale soweit erwärmt, daß aufgrund der größeren Wärmedehnung des äußeren Metallstreifens 23a (im Vergleich zur geringeren Wärmedehnung des inneren Metallstreifens 23b) sich das freie Ende 23.2 der Bimetall-Spirale 23 etwas gestreckt hat und dabei zur Anlage mit dem Gegenkontakt 25 gekommen ist. Ein ausreichender Kontaktdruck und eine akzentuierte Schaltbewegung wird dabei erzielt durch eine bei 26.1 eingehängte Totpunktfeder 26. Diese greift am freien Ende eines mit den beiden Bimetallstreifen 23a, 23b verbundenen und bei 27.1 schneidengelagerten Blechstreifens 27 an (dieser ist strichpunktiert angedeutet). Die Einstellung ist so vorgenommen, daß die beiden Kontaktpositionen I und II stabile Übertotpunkt-Lagen sind.

**Patentansprüche**

1. Einrichtung zur kontrollierten Verbrennung von zündfähigen Wasserstoff-Luft-Gemischen im Containment von wassergekühlten Kernreaktoranlagen, mit wenigstens einer Zündquelle, **dadurch gekennzeichnet,** daß die Zündquelle (Z1, Z2, Z3) mit einem autarken, in regelmäßigen Zeitabständen auf seinen Ladezustand überprüfbaren Energiespeicher (1) versehen ist und daß zur Auslösung des Zündvorganges ein temperaturabhängig ansprechendes Auslöseelement (3, 3′) die Entladung des Energiespeichers in die Zündquelle (6) während einer vorgegebenen Zeitspanne veranlaßt.

2. Einrichtung nach Anspruch 1, **dadurch gekennzeichnet,** daß der Energiespeicher die Trockenbatterie (1) einer Hochspannungs-Zündeinheit (Z1) mit einem federbelasteten Schalter (2) im Stromkreis der Trockenbatterie (1) sowie mit Hochspannungsmodul (4), Ladekondensator (5) und Funkenzünder (6) ist und daß das temperaturabhängig ansprechende Auslöseelement (3) zur Schließung des federbelasteten Schalters (2) im Ansprechfalle eingerichtet ist.

3. Einrichtung nach Anspruch 1 oder 2, **gekennzeichnet durch** ein schnell ansprechendes Sprinkler-Element (3) als Auslöseelement, mit einer bei Erreichen eines Temperatur-Grenzwertes platzenden Wand, Haut oder Membrane, welche den Energiespeicher (1) zur Entladung bzw. den federbelasteten Schalter (2) zur Schließung freigibt.

4. Einrichtung nach Anspruch 1 oder 2, **gekennzeichnet durch** eine Bimetall-Anordnung (3′) als temperaturbeständiges Auslöselement, welche bei Erreichen eines Temperatur-Grenzwertes den federbelasteten Schalter (2) zur Schließung freigibt oder betätigt.

5. Einrichtung nach Anspruch 2, **gekennzeichnet durch** einen Lithium-Sammler als Trockenbatterie.

## Claims

1. Device for the controlled combustion of ignitable hydrogen-air mixtures in the containment of water-cooled nuclear reactor installations, having at least one ignition source, characterized in that the ignition source (Zl, Z2, Z3) is provided with a self-sufficient energy store (1) which can be monitored at regular intervals for its charge state and in that to trip the ignition process a tripping element (3, 3') responding in a temperature-dependent manner causes the discharge of the energy store into the ignition source (6) during a specified time interval.

2. Device according to claim 1, characterized in that the energy store is the dry battery (1) of a high-voltage ignition unit (Z1) with a spring-loaded switch (2) in the circuit of the dry battery (1) as well as with high-voltage module (4), charge capacitor (5) and spark igniter (6) and that the tripping element (3) responding in a temperature-dependent manner is equipped for the closure of the spring-loaded switch (2) in a response situation.

3. Device according to claim 1 or 2, characterized by a quick-responding sprinkler element (3) as tripping element, with a wall, skin or membrane which breaks open when a threshold temperature value is reached, opening the energy store (1) for the discharge or the spring-loaded switch (2) for the closure.

4. Device according to claim 1 or 2, characterized by a bimetallic arrangement (3') as temperature-resistant tripping element, which opens or actuates the spring-loaded switch (2) for the closure when a limiting temperature value is reached.

5. Device according to claim 2, characterized by a lithium collector as dry battery.

## Revendications

1. Dispositif pour la combustion contrôlée de mélanges hydrogène-air inflammables dans l'enceinte de confinement de réacteurs nucléaires refroidis par eau, comportant au moins une source d'allumage, caractérisé par le fait que la source d'allumage (Z1,Z2,Z3) est équipée d'un accumulateur d'énergie autonome, dont l'état de charge peut être contrôlé à des intervalles de temps réguliers et que, pour le déclenchement du processus d'allumage, un élément de déclenchement (3,3') qui répond en fonction de la température, déclenche la décharge de l'accumulateur d'énergie dans la source d'allumage (6) pendant un intervalle de temps prédéterminé.

2. Dispositif suivant la revendication 1, caractérisé par le fait que l'accumulateur d'énergie est la batterie sèche (1) d'une unité d'allumage à haute tension (Z1) comportant un interrupteur (2) chargé par un ressort et placé dans le circuit de la batterie sèche (1), ainsi qu'un module haute tension (4), un condensateur de charge (5) et un allumeur à étincelles (6), et que l'élément de déclenchement (3), qui répond en fonction de la température, est agencé pour fermer l'interrupteur (2), chargé par un ressort, lors d'une réponse.

3. Dispositif selon la revendication 1 ou 2, caractérisé par un élément de sprinkler (3), qui répond rapidement, en tant qu'élément de déclenchement, comportant une paroi, une coque ou une membrane qui explose lorsqu'une valeur limite de la température est atteinte et libère l'accumulateur d'énergie (1) pour sa décharge ou l'interrupteur (2), chargé par un ressort, pour la fermeture.

4. Dispositif suivant la revendication 1 ou 2, caractérisé par un dispositif bimétallique (3') en tant qu'élément de déclenchement résistant à la température, qui libère ou actionne l'interrupteur (2) chargé par un ressort, pour sa fermeture, lorsqu'une valeur limite de la température est atteinte.

5. Dispositif suivant la revendication 2, caractérisé par un accumulateur au lithium en tant que batterie sèche.

FIG 1

FIG 2

FIG 3

FIG 4